# EUROPÄISCHE PATENTANMELDUNG

(11) **EP 4 477 477 A2**
(43) Veröffentlichungstag der Anmeldung: **18.12.2024**
(21) Anmeldenummer: 24210688.8
(22) Anmeldetag: 26.01.2022
(51) Int. Cl.: B60R 19/18

(54) **STOSSFÄNGERANORDNUNG FÜR EIN KRAFTFAHRZEUG**

(30) Priorität: 02.02.2021 DE 102021102366
(62) Teilanmeldung aus: 22153426.6
(71) Anmelder: Benteler Automobiltechnik GmbH, 33102 Paderborn (DE)
(72) Erfinder: Berger, Karl Kristian, 2816 Gjovik (NO); Haker, Jens Chr., 2815 Gjovik (NO); Handing, Christian, 33449 Langenberg (DE); Hitz, Andreas, 59597 Erwitte (DE); Paulsen, Frode, 2819 Gjovik (NO); Rabe, Frank, 32120 Hiddenhausen (DE); Sovik, Odd Perry, 2847 Kolbu (NO)
(74) Vertreter: Osterhoff, Utz

(57) **Zusammenfassung**

Die vorliegende Erfindung betrifft eine Stoßfängeranordnung (1) für ein Kraftfahrzeug, aufweisend einen oberen Hauptquerträger (2), welcher über Crashboxen (7) an dem Kraftfahrzeug koppelbar ist und einen unteren Hilfsquerträger (3), wobei Hauptquerträger (2) und Hilfsquerträger (3) miteinander über vertikale Streben (4) gekoppelt sind. Der Hauptquerträger (2) und der Hilfsquerträger (3) verlaufen zumindest abschnittsweise um die Vertikalachse gekrümmt, wobei Hauptquerträger (2) und Hilfsquerträger (3) voneinander verschiedene Krümmungsradien aufweisen und/oder dass der Hilfsquerträger (3) gegenüber dem Hauptquerträger (2) in Kraftfahrzeuglängsrichtung (X) zum Kraftfahrzeug hin gerichtet zurückversetzt ist und/oder dass der Hilfsquerträger (3) einen mittleren Abschnitt aufweist, welcher auf die Vertikalrichtung bezogen versetzt ist.

## Beschreibung

Die vorliegende Erfindung betrifft eine Stoßfängeranordnung für ein Kraftfahrzeug gemäß den Merkmalen im Oberbegriff von Anspruch 1.

Aus dem Stand der Technik ist es bekannt, dass Kraftfahrzeuge front- bzw. endseitig Stoßfängeranordnungen aufweisen. Im Falle eines Fahrzeugcrashes bzw. eines Auffahrunfalls oder auch eines Anpralls an einen Gegenstand, werden durch eine solche Stoßfängeranordnung zwei Aufgaben erfüllt. Zum einen ist ein Querträger vorhanden. Der Querträger besitzt eine hinreichende Steifigkeit um zu verhindern, dass ein entsprechender Gegenstand oder ein Kraftfahrzeug zu stark in den Front- oder Endbereich eindringen würde. Mithin wird ein evtl. punktuelles Auftreffen, beispielsweise auf einen Pfahl, durch den Querträger auf einen Großteil der Kraftfahrzeugbreite übertragen.

Eine zweite Aufgabe, die durch eine Stoßfängeranordnung erfüllt wird, ist die Wandlung von Crashenergie in Umformabarbeit und dadurch eine entsprechende Abbau/Absorption der Aufprallenergie. Hierzu ist ein jeweiliger Querträger über Crashboxen an das Kraftfahrzeug gekoppelt. Die Crashboxen sind hierzu auf die Kraftfahrzeugquerrichtung bezogen, zwischen einem Mittelbereich und einem Endbereich des Querträgers angeordnet. Die Crashboxen werden dann zumeist an Längsträger des Kraftfahrzeugs gekoppelt. Im Falle eines Aufpralls falten sich die Crashboxen beispielsweise ziehharmonikaartig und wandeln somit Crashenergie in Umformarbeit um.

Aufgabe der vorliegenden Erfindung ist es, ausgehend vom Stand der Technik, eine Stoßfängeranordnung aufzuzeigen, die ein verbessertes Crashverhalten, insbesondere für den MPDB Crashtest aufweist.

Die zuvor genannte Aufgabe wird erfindungsgemäß mit einer Stoßfängeranordnung für ein Kraftfahrzeug gelöst, mit den Merkmalen im Anspruch 1.

Vorteilhafte Ausgestaltungsvarianten der vorliegenden Erfindung sind Gegenstand der abhängigen Ansprüche.

Die Stoßfängeranordnung für ein Kraftfahrzeug weist einen oberen Hauptquerträger, welcher über Crashboxen an dem Kraftfahrzeug gekoppelt ist und einen unteren Hilfsquerträger auf. Der Hauptquerträger und der Hilfsquerträger sind miteinander über vertikale Streben gekoppelt. Der Hilfsquerträger kann optional an den Crashboxen mit abgestützt sein. Der Hilfsquerträger kann auch über separate untere Crashabstützungen an dem Kraftfahrzeug abgestützt sein.

Erfindungsgemäß zeichnet sich die Stoßfängeranordnung dadurch aus, dass der Hauptquerträger und der Hilfsquerträger zumindest abschnittsweise um die Vertikalachse gekrümmt verlaufen, wobei jedoch der Hauptquerträger und der Hilfsquerträger voneinander verschiedene Krümmungsradien aufweisen können.

Insbesondere ist dies kombiniert mit einem Versatz des Hilfsquerträgers in Kraftfahrzeuglängsrichtung in Richtung zu dem Fahrzeug. Bei einer an einer Fahrzeugfront angeordneten Stoßfängeranordnung ist somit der Hilfsquerträger komplett oder abschnittsweise auf die Kraftfahrzeuglängsrichtung nach hinten oder vorne versetzt angeordnet.

Optional ergänzend oder alternativ ist vorgesehen, dass der Hilfsquerträger einen mittleren Abschnitt aufweist, welcher auf die Vertikalrichtung bezogen, versetzt ist, insbesondere nach oben oder nach unten. Auch kann der Hauptquerträger einen Mittelabschnitt haben, der einen Versatz bzw. Offset in Vertikalrichtung, mithin in Kraftfahrzeug-X-Richtung aufweist. Dies kann ergänzend zu dem Versatz des Hilfsquerträgers in Vertikalrichtung ausgebildet sein. Auch kann der Hauptquerträger in Alleinstellung einen Versatz in Kraftfahrzeugvertikalrichtung aufweisen, bezogen auf die Kraftfahrzeugvertikalrichtung eben verlaufendem Hilfsquerträger. Durch die vorgenannten Maßnahmen wird es erfindungsgemäß erreicht, dass ein Frontalchrash mit seitlicher Überdeckung auf Haupt- und auch Hilfsquerträger verteilt wird. Die Intrusionskräfte in die Fahrzeugfront werden somit besser aufgeteilt.

Durch die Möglichkeiten aufgrund der Krümmungen von Haupt- und Hilfsquerträger bzw. aufgrund des Versatzes in Kraftfahrzeuglängsrichtung von Hilfsquerträger zu Hauptquerträger können die gewünschten Crashreaktionen hinsichtlich des Energieabbaus nach den Anforderungen der jeweiligen Kraftfahrzeugklasse, welche mit der Stoßfängeranordnung ausgerüstet wird, eingestellt werden, dass die herstellerseitige sowie gesetzliche, jeweilige geforderte Crashperformance erreicht wird.

Insbesondere sind Hauptquerträger und Hilfsquerträger in Verbindung mit den vertikalen Streben einstückig und werkstoffeinheitlich hergestellt. Hierzu bietet es sich im Rahmen der Erfindung insbesondere an, die Stoßfängeranordnung als Pressumformbauteil herzustellen, insbesondere aus einer Stahllegierung. Es handelt sich somit um ein Schalenbauteil, welches aus einer Platine umformtechnisch hergestellt ist. Haupt- und Hilfsquerträger weisen bevorzugt einen profilierten Querschnitt, insbesondere U-förmig bzw. C-förmig oder auch hutförmig auf. Optional kann ein jeweiliges Schließblech an Hauptquerträger oder Hilfsquerträger angesetzt werden, auf die Längsrichtung bezogen ggf. auch nur abschnittsweise.

Alternativ ist es erfindungsgemäß möglich, dass der Hauptquerträger und der Hilfsquerträger einstückig und werkstoffeinheitlich aus einem Extrusionsprofil hergestellt sind, insbesondere aus einer Leichtmetalllegierung. Hierzu ist es zunächst möglich, ein Profil mit mehreren Hohlkammern, die über einen Steg verbunden sind, im Querschnitt kompakt zu extrudieren. Im Anschluss wird dies umformtechnisch und schneidetechnisch bearbeitet, so dass ein auf die Vertikalrichtung bezogen oben angeordneter Hauptquerträger und ein darunter angeordneter Hilfsquerträger ausgebildet ist. Die entsprechenden Krümmungen können durch ein weiteres biegetechnisches Bearbeiten hergestellt werden. Die Verbindungen, welche über die vertikalen Streben ausgebildet sind, ist ein Verbindungssteg der zwischen den Profilen stehenbleibt. Das restliche Material kann schneidetechnisch entfernt werden.

Die vertikalen Streben weisen selbst einen profilierten Querschnitt auf, insbesondere U-förmig, C-förmig oder hutförmig. Ganz besonders bevorzugt ist ein vorderer Steg vom Fahrzeug wegweisend angeordnet. Durch diese Maßnahme sind der Hauptquerträger und der Hilfsquerträger besonders biegesteif miteinander gekoppelt, was wiederum die Crashperformance steigert.

In einer weiteren bevorzugten Ausgestaltungsvariante ist in dem Hauptquerträger eine Eindrückung vorhanden, dergestalt, dass bei einer Belastung in Längsrichtung eine initiale Deformation stattfindet. Die Eindrückung ist insbesondere an einer auf die Kraftfahrzeuglängsrichtung bezogenen Vorderwand des Hauptquerträgers vorgesehen. Besonders bevorzugt können auch zwei oder mehr Eindrückungen vorhanden sein. Die zwei Eindrückungen sind voneinander in Kraftfahrzeugquerrichtung beabstandet. Bevorzugt sind die zwei Eindrückungen jedoch symmetrisch zueinander angeordnet, bezogen auf eine Mittelebene in Kraftfahrzeugquerrichtung. Durch die Eindrückung bzw. Eindrückungen an der Vorderseite kann zum einen eine initiale Deformation stattfinden, so dass sich die Stoßfängeranordnung jeweils nur mit einer Hälfte, bezogen auf die Kraftfahrzeugquerrichtung, entsprechend deformiert. Auch kann eine initiale Krafteinleitung, mithin die Erstaufprallkraft durch eine Verformung des Hauptquerträgers in sich, einen ersten Peak an Crashenergie abbauen.

Weiterhin bevorzugt ist der Hilfsquerträger an untere Crashabstützelemente gekoppelt. Alternativ oder ergänzend ist der Hilfsquerträger an zusätzlichen Längsträgern bzw. Crashboxen gekoppelt, welche wiederum an dem Kraftfahrzeug abgestützt sind. Somit stellt der Hilfsquerträger einen weiteren Lastpfad bereit, der wiederum die bei einem Frontalaufprall auftretenden Kräfte gleichmäßiger und damit im jeweils lokal geringerem Umfang in das Kraftfahrzeug einleiten, wodurch wiederum die gesamte Crashperformance gesteigert wird.

Zur weiteren Verbesserung des Crashverhaltens ist an dem Hauptquerträger und/oder dem Hilfsquerträger mindestens ein zusätzliches Abstützelement angeordnet, wobei das Abstützelement den Hauptquerträger und/oder den Hilfsquerträger zusätzlich an der Crashbox bzw. einer unteren Crashabstützung abstützt.

Hierzu ist das Abstützelement insbesondere einstückig und werkstoffeinheitlich mit dem Hauptquerträger bzw. dem Hilfsquerträger ausgebildet. Durch eine entsprechende biegetechnische Bearbeitung zeigt dann das Abstützelement insbesondere in Kraftfahrzeuglängsrichtung vom Hauptquerträger bzw. Hilfsquerträger bezogen, nach hinten orientiert und ist an der Crashbox abgestützt. Insbesondere findet diese Abstützung seitlich oder unterhalb bzw. oberhalb der Crashbox bzw. an einem Längsträger des Kraftfahrzeuges statt.

Durch das eine zusätzliche Abstützelement können weiterhin die im Frontalcrashfall auftretenden Längskräfte auf mehrere Lastpfade verteilt werden, wodurch sich wiederum die Crashperformance der erfindungsgemäßen Stoßfängeranordnung steigert.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren wiedergegeben.

Diese dienen dem einfachen Verständnis der Erfindung. Es zeigen
- Figur 1: eine perspektive Darstellung einer erfindungsgemäßen Stoßfängeranordnung,
- Figur 2a bis f: eine erfindungsgemäße erste Ausgestaltungsvariante einer erfindungsgemäßen Stoßfängeranordnung in Draufsicht, Frontansicht und verschiedenen Schnittansichten,
- Figur 3: eine Querschnittsansicht durch ein Extrusionsprofil,
- Figur 4a bis c: eine zweite Ausführungsvariante in Frontansicht sowie Querschnittsansichten,
- Figur 5: ein Crashszenario einer erfindungsgemäßen Stoßfängeranordnung in Draufsicht,
- Figur 6a bis d: eine dritte Ausführungsvariante in Frontansicht sowie Querschnittsansichten,
- Figur 7a bis f: eine vierte Ausführungsvariante in Draufsicht, Frontansicht sowie Querschnittsansichten,
- Figur 8a bis f: eine fünfte Ausführungsvariante in Draufsicht, Frontansicht sowie Querschnittsansichten,
- Figur 9a bis f: eine sechste Ausführungsvariante in Draufsicht, Frontansicht sowie Querschnittsansichten,
- Figur 10a bis f: eine siebte Ausführungsvariante in Draufsicht, Frontansicht sowie Querschnittsansichten,
- Figur 11a bis d: eine achte Ausführungsvariante in Draufsicht, Frontansicht sowie Querschnittsansichten,
- Figur 12a bis e: eine neunte Ausführungsvariante in Draufsicht, Frontansicht sowie Querschnittsansichten,
- Figur 13a bis f: eine zehnte Ausführungsvariante in Draufsicht, Frontansicht sowie Querschnittsansichten,
- Figur 14a bis e: eine elfte Ausführungsvariante in Draufsicht, Frontansicht sowie Querschnittsansichten,
- Figur 15a bis e: eine zwölfte Ausführungsvariante in Draufsicht, Frontansicht sowie Querschnittsansichten,
- Figur 16a bis f: eine dreizehnte Ausführungsvariante in Draufsicht, Frontansicht sowie Querschnittsansichten und
- Figur 17a bis d: eine vierzehnte Ausführungsvariante in Draufsicht, Frontansicht sowie Querschnittsansichten,
- Figur 18a und b: zeigen eine fünfzehnte Ausführungsvariante in Draufsicht und Querschnittsansicht,
- Figur 19a und b: zeigen eine sechzehnte Ausführungsvariante in Draufsicht und Querschnittsansicht und
- Figur 20a bis c: zeigen eine siebzehnte Ausführungsvariante in Draufsicht sowie Querschnittsansichten.

In den Figuren werden für gleiche oder ähnliche Bauteile dieselben Bezugszeichen verwendet, auch wenn eine wiederholte Beschreibung aus Vereinfachungsgründen entfällt.

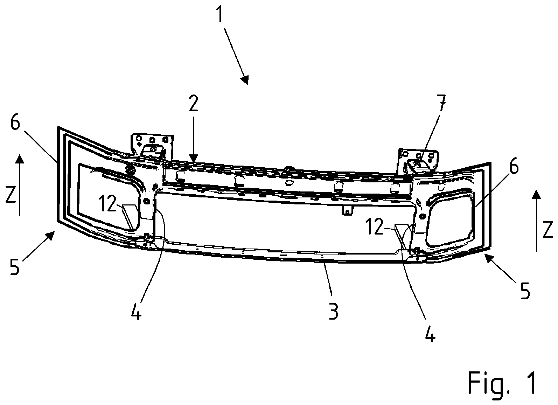

Figur 1 zeigt eine erfindungsgemäße Stoßfängeranordnung 1 für ein nicht näher dargestelltes Kraftfahrzeug. Die Stoßfängeranordnung 1 weist einen oberen Hauptquerträger 2 sowie ein auf die Kraftfahrzeugvertikalrichtung Z bezogen darunter befindlichen Hilfsquerträger 3 auf. Der Hauptquerträger 2 und der Hilfsquerträger 3 sind über vertikale Streben 4, 6 miteinander gekoppelt. In den jeweiligen Endbereichen 5 ist ein vertikales Element 6 vorgesehen, welches ebenfalls den Haupt- und Hilfsquerträger 2, 3 miteinander verbindet. Der Hauptquerträger 2 ist über Crashboxen 7 mit dem nicht näher dargestellten Kraftfahrzeug gekoppelt. Die vertikalen Streben 4 können sich nicht näher dargestellt, ebenfalls an den Crashboxen 7 abstützen. Der Hilfsquerträger 3 ist über untere Crashabstützungen 12 an dem Kraftfahrzeug abgestützt.

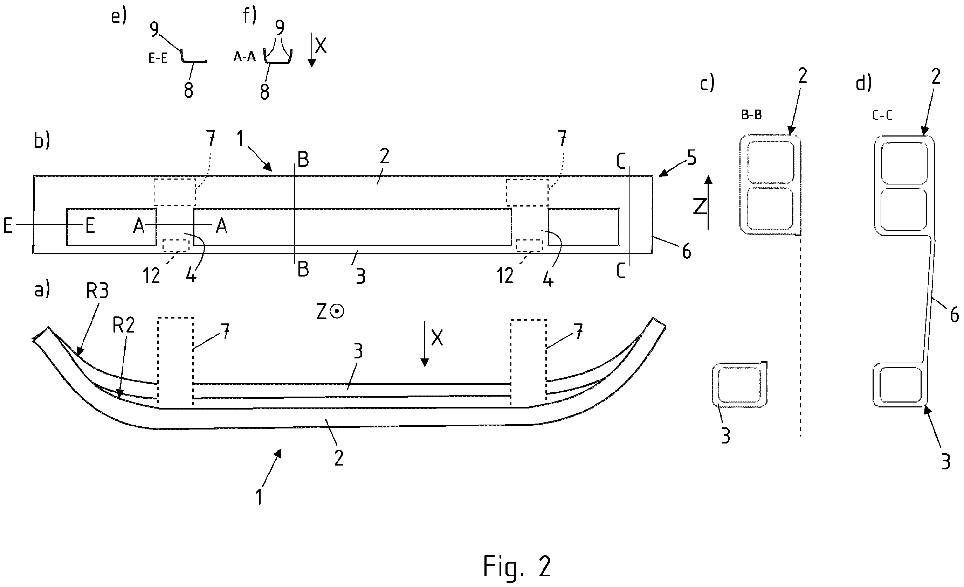

Figur 2a bis f zeigen eine Ausgestaltungsvariante der vorliegenden Erfindung. Dargestellt ist die erfindungsgemäße Stoßfängeranordnung 1 mit oben angeordnetem Hauptquerträger 2 sowie auf die Vertikalrichtung bezogen, darunter angeordnetem Hilfsquerträger 3. Der Hauptquerträger 2 ist über Crashboxen 7 mit dem Kraftfahrzeug nicht näher dargestellt gekoppelt. Beispielsweise sind die Crashboxen 7 an die Vorderseite eines jeweiligen nicht näher dargestellten Längsträgers des Kraftfahrzeuges gekoppelt. Der Hilfsquerträger 3 ist über untere Crashabstützungen 12 an dem Kraftfahrzeug abgestützt.

Gemäß Figur 2a ist in der Kraftfahrzeuglängsrichtung X der Kraftfahrzeugvertikalrichtung Z unten angeordnete Hilfsquerträger 3 gegenüber dem Hauptquerträger 2 zumindest in einem überwiegend großen Teil des Mittelabschnittes, mithin zwischen den Crashboxen 7, ggf. auch in den jeweiligen Randbereich, zurückversetzt ausgebildet. Im Falle eines Aufpralls findet somit zunächst ein Kontakt mit dem Hauptquerträger 2 statt. Nach Deformation des Hauptquerträgers 2 findet dann auch eine zusätzliche Deformation des Hilfsquerträgers 3 statt. Ferner ersichtlich gemäß Figur 2a ist, dass der jeweilige Krümmungsradius, mit welchem der Hauptquerträger 2 bzw. Hilfsquerträger 3 um die Vertikalachse Z gekrümmt verlaufen, voneinander verschieden ist. Der Krümmungsradius des Hauptquerträgers 2 ist dabei kleiner als der Krümmungsradius des Hilfsquerträgers 3. Dies bedeutet, der Hauptquerträger 2 ist stärker gekrümmt ausgebildet als der Krümmungsradius des Hilfsquerträgers 3. In dem Zusammenspiel mit dem auf die Kraftfahrzeuglängsrichtung bezogenen Versatz des Hilfsquerträgers 3 in Richtung zum Fahrzeug kann somit auch mit unterschiedlichen Krümmungsradien zunächst sichergestellt werden, dass ein barriere- oder aufpressender Gegenstand zunächst gegen den Hauptquerträger 2 prallt und erst im späteren gegen den Hilfsquerträger 3. Hauptquerträger 2 und Hilfsquerträger 3 sind über die jeweilige vertikale Strebe 4 miteinander gekoppelt. Gemäß Figur 2f ist ein Querschnitt mit der Schnittlinie A-A der vertikalen Strebe 4 gezeigt. Diese ist im Querschnitt U-förmig ausgebildet. Ein vorderer Steg 8 ist vom Kraftfahrzeug weggerichtet. Von dem Steg 8 abgebogene Schenkel 9 sind nach hinten orientiert. Somit ist die vertikale Strebe 4 versteift ausgebildet. Aufgrund des nach vorne gerichteten Steges 8 entsteht zunächst ein Aufprall mit einem Gegenstand. Ferner sind im jeweiligen Endbereich noch vertikale Elemente 6 angeordnet. Ein Schnitt durch die vertikalen Elemente 6 ist in Figur 2e gezeigt gemäß der Schnittlinie E-E. Das vertikale Element 6 ist im Querschnitt selbst L-förmig ausgebildet, wobei auch hier ein nach vorne gerichteter Steg 8 und ein davon nach hinten abgebogener Schenkel 9 ausgebildet ist.

In diesem Falle trifft auch zunächst der Steg 8 auf einen auftreffenden Gegenstand bzw. eine Barriere. Die Crashboxen 7 sind in diesem Falle auf die Kraftfahrzeugvertikalrichtung oberhalb der vertikalen Streben 4 angeordnet. Darüber hinaus ist ein Vertikalschnitt dargestellt in Figur 2c gemäß der Schnittlinie B-B. Dargestellt ist der Hauptquerträger 2 als Zweikammerhohlprofil sowie der Hilfsquerträger 3 als Einkammerhohlprofil. Weiterhin dargestellt ist gemäß der Schnittlinie C-C in Figur 2d der Endbereich 5, wonach Hauptquerträger 2 und Hilfsquerträger 3 über ein vertikales Element 6 miteinander gekoppelt sind. Das vertikale Element 6 ist einstückig und werkstoffeinheitlich mit dem Hauptquerträger 2 und dem Hilfsquerträger 3 hergestellt, beispielsweise durch einen Extrusionsprozess aus einer Leichtmetalllegierung, konkret eine Aluminiumlegierung. Der in Figur 2c gemäß der Schnittlinie B-B nicht vorhandene Steg 8 bzw. das vertikale Element 6 ist dann schneidetechnisch entfernt worden.

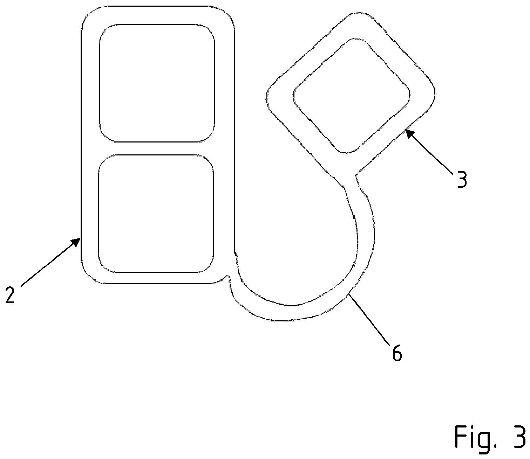

Figur 3 zeigt ein solches Extrusionsprofil im Querschnitt. Hierbei ist zu erkennen, dass ein Zweikammerhohlprofil zur Ausbildung des späteren Hauptquerträgers 2 und ein Einkammerhohlprofil zur Ausbildung des späteren Hilfsquerträgers 3 über ein vertikales Element 6 miteinander gekoppelt sind. In einem nicht näher dargestellten Umformschritt wird das zunächst so hergestellte Extrusionsprofil dann zunächst umformtechnisch bzw. biegetechnisch derart bearbeitet, dass es abgeflacht wird, so dass auf die Vertikalrichtung bezogen, oberhalb Hauptquerträger 2 und Vertikalrichtung orientiert darunter der Hilfsquerträger 3 angeordnet ist und der Steg 8 das Vertikalelement ausbildet. Zunächst kann jedoch somit im Querschnitt ein kompaktes Profil extrudiert werden.

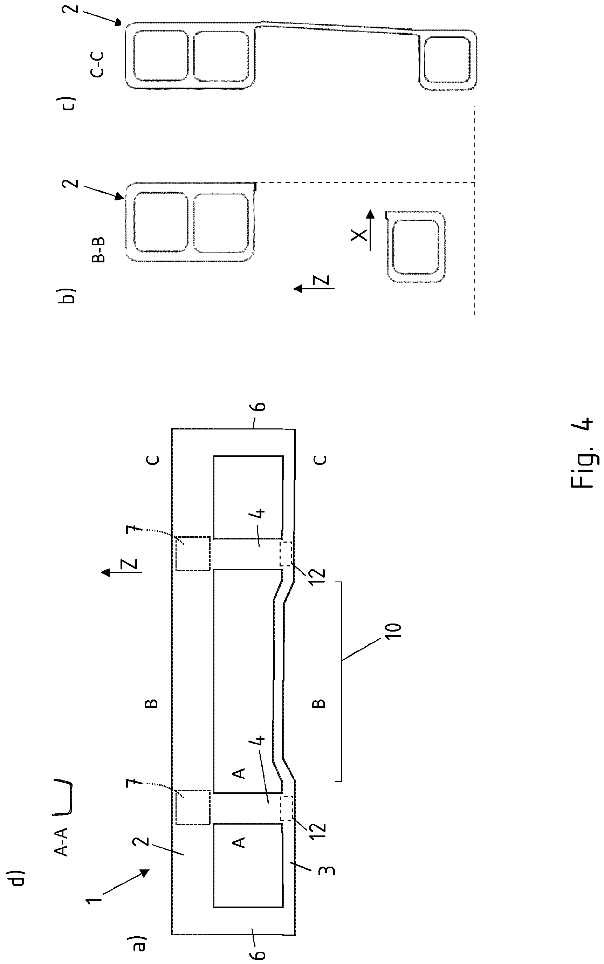

Figur 4a bis c zeigen eine Ausgestaltungsvariante analog zur Figur 2. Hierbei ist jedoch die Besonderheit gegeben, dass ein mittlerer Abschnitt 10 des Hilfsquerträgers 3 auf die Vertikalrichtung nach oben hin versetzt ist. Durch diesen Versatz kann ein Höhenunterschied je nach Crashanforderung ausgeglichen werden, beispielsweise zum Erreichen eines Bumper-to-Bumper-Tests oder auch eines zusätzlich zu erfüllenden Fußgängeraufprall-Tests. Auch können entsprechende Luftführungen für dahinter befindliche nicht näher dargestellte Kühlelemente oder ähnliches verwendet werden.

Gemäß Figur 4b und 4c ist nochmals ersichtlich, dass der auf die Kraftfahrzeugvertikalrichtung Z unten angeordnete Hilfsquerträger 3 gegenüber dem Hauptquerträger 2 auf die Vertikalrichtung bezogen einen Versatz im Mittelabschnitt nach oben aufweist. Ferner ist, wie bereits in Figur 2f auch möglich, dass der Hilfsquerträger 3 auf die Kraftfahrzeuglängsrichtung X bezogen, einen Versatz nach hinten aufweist. Dieser Versatz muss jedoch nicht ausgebildet sein, auch der Versatz im Mittelabschnitt kann nur allein ausgebildet sein. Dies betrifft den Höhenversatz in Kraftfahrzeugvertikalrichtung, welcher dann ohne einen Versatz in Kraftfahrzeuglängsrichtung ausgebildet wäre.

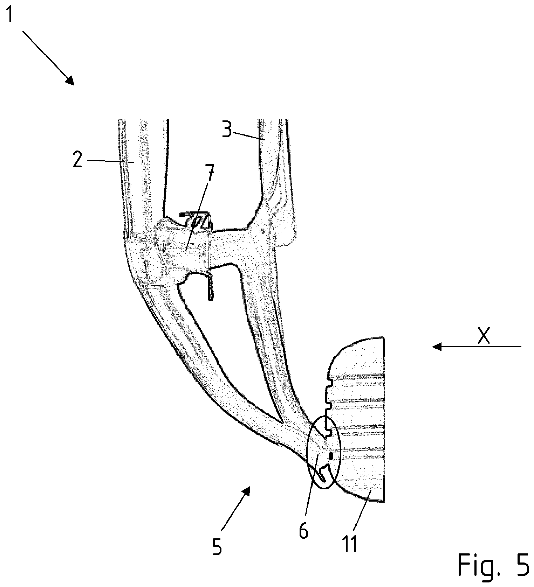

Figur 5 zeigt einen erfindungswesentlichen Effekt. Dies zeigt die Stoßfängeranordnung 1 in einer Ansicht von oben im Falle eines bereits erfolgten Crashes. Zu erkennen ist, dass die Crashbox 7 bereits gestaucht ist. Der oben angeordnete Hauptquerträger 2 und der auf die Vertikalrichtung darunter befindliche Hilfsquerträger 3 sind weiter unten angeordnet. Das vertikale Element 6 im Endbereich 5 ist auf die Kraftfahrzeuglängsrichtung bezogen, auf ein Rad 11 zubewegt worden. Dies stützt sich nunmehr, insbesondere mit seinem abgebogenen Schenkel gemäß Figur 2e, an einem Rad 11 ab. Zunächst kann noch ein nicht näher dargestelltes Radhaus kontaktiert werden. Es ergäbe sich somit ein weiterer Lastpfad über das Rad 11 sowie in Kraftfahrzeuglängsrichtung dahinter folgend, nicht näher dargestellten Schweller. Die Hauptquerträger 2 wird, wenn keine untere Crashboxen vorhanden sind, somit nicht nur ausschließlich über die Crashbox 7 eingeleitet, sondern auch über einen zweiten Lastpfad, mithin über das Rad 11 und den dahinter befindlichen Schweller in Kraftfahrzeuglängsrichtung in die Kraftfahrzeugkarosserie eingeleitet. Durch das vertikale Element 6 entsteht eine besonders gute Abstützfläche, so dass das Rad 11 in Kraftfahrzeuglängsrichtung getroffen und ein Unter- oder Überwandern des Rades 11 aufgrund der Rotationsverbindung des Rades 11 der Crashenergie wird sicher vermieden. Auf die Kraftfahrzeugvertikalrichtung bezogen hohe Aufprallfläche des vertikalen Elementes 6 in Verbindung mit Haupt- und Hilfsquerträger 2, 3 wird eine sichere Abstützung an dem Rad 11 sichergestellt. Es wird somit vermieden, dass die Stoßfängeranordnung 1 im Falle beispielsweise nur des Hauptquerträgers 2 über das Rad 11 gehoben wird und hier entsprechend keine zusätzliche Abstützung am Rad 11 erfolgen würde.

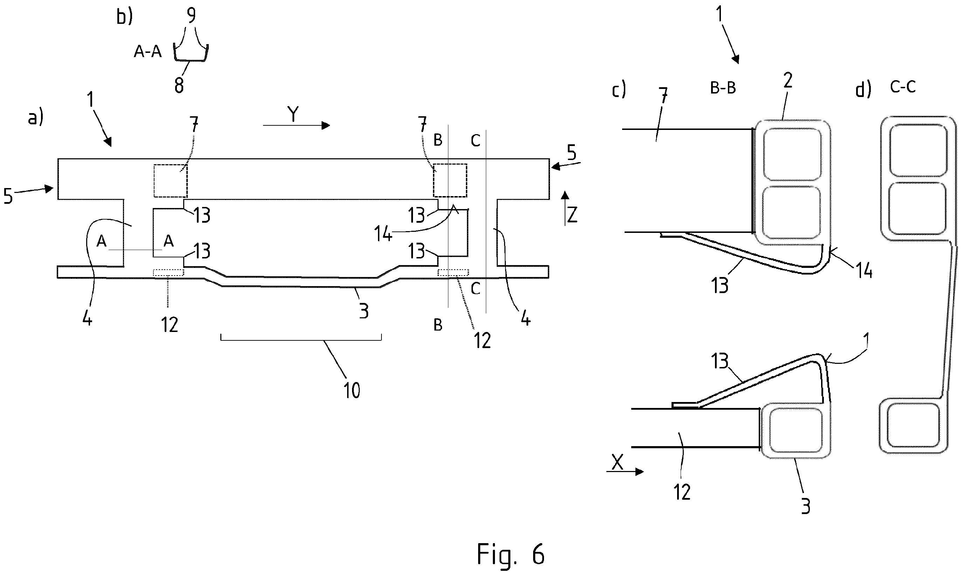

Figuren 6a bis d zeigen eine alternative Ausgestaltungsvariante mit einer erfindungsgemäßen Stoßfängeranordnung 1. Diese kann auch einen eigenständigen Erfindungsgedanken darstellen, jedoch auch in Kombination mit einem oder mehreren der Ausführungsbeispiele gemäß der Figuren 1 bis 5 angewandt werden.

Gemäß Figur 6a ist eine Stoßfängeranordnung 1 gezeigt, welche ebenfalls einen Hauptquerträger 2 sowie einen auf die Kraftfahrzeugvertikalrichtung Z darunter angeordneten Hilfsquerträger 3 aufweist. Ein Mittelabschnitt des Hilfsquerträgers 3 kann auf die Vertikalrichtung Z nach unten, jedoch alternativ nicht dargestellt, auch nach oben versetzt angeordnet sein. Der Hauptquerträger 2 und der Hilfsquerträger 3 sind jeweils über vertikale Streben 4 miteinander gekoppelt. In diesem Ausführungsbeispiel sind die jeweiligen Endbereiche 5 von Hauptquerträger 2 und Hilfsquerträger 3 nicht nochmals separat über ein vertikales Elemente 6 miteinander gekoppelt. Dies kann jedoch ausgebildet sein, ist jedoch nicht dargestellt.

Die Crashboxen 7, angedeutet durch die gestrichelte Linie, an dem der Hauptquerträger 2 befestigt ist, sind jedoch auf die Kraftfahrzeugquerrichtung Y nach innen versetzt angeordnet, mithin nach innen versetzten neben den vertikalen Streben 4. Zudem ist der Hilfsquerträger 3 über jeweils eine zusätzliche Crashbox 12 in Kraftfahrzeuglängsrichtung abstützt, was ebenfalls in der Figur 6c im Querschnitt gezeigt ist. Gemäß der Figur 6b ist der Querschnitt der vertikalen Strebe 4 ebenfalls U-förmig ausgebildet, mit einem nach vorn gerichteten Steg 8 sowie die davon abgebogenen Schenkeln 9.

Erfindungswesentlich bei der Ausgestaltungsvariante von Figur 6 ist nunmehr, dass jeweils ein zusätzliches Abstützelement 13 auf Hauptquerträger 2 und auch optional hier dargestellt ein zusätzliches Abstützelement 13 am Hilfsquerträger 3 vorhanden ist. Bei diesem zusätzlichen Abstützelement 13 handelt es sich um ein einstückig und werkstoffeinheitlich mit dem Hauptquerträger 2 bzw. Hilfsquerträger 3 ausgebildetes Materialstück, welches biegetechnisch als eine Art Spange abgewandt ist und im Falle von Figur 6c für den Hauptquerträger 2 unterhalb der Crashbox 7 angeordnet und mit dieser gekoppelt ist. Im Falle des Hilfsquerträgers 3 nach oben hinten abgebogen ist und somit mit der zusätzlichen Crashbox 12 gekoppelt ist. Hierdurch erfolgt eine zusätzliche Abstützwirkung, jedoch auch eine Vergrößerung der Aufprallfläche an den Vorderseiten 14, 15 von Hauptquerträger 2 und Hilfsquerträger 3.

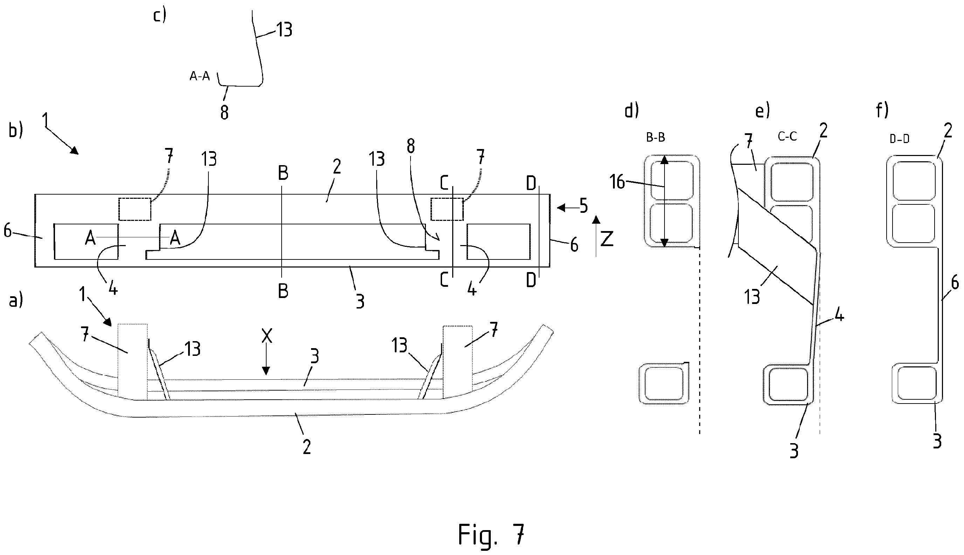

Figuren 7a bis f zeigen eine weitere alternative Ausgestaltungvariante der vorliegenden Erfindung.

Alternativen jedoch mit den vorgenannten Beispielen ergänzend beliebig kombinierbare Ausführungsvariante der Erfindung. Gemäß Figur 7a und b ist eine Stoßfängeranordnung 1 bekannt, welche einen Hauptquerträger 2 und einen Hilfsquerträger 3 aufweist. Der Hilfsquerträger 3 ist gemäß der Draufsicht von Figur 7a in Kraftfahrzeuglängsrichtung gegenüber dem Hauptquerträger 2 nach hinten versetzt angeordnet. Der Hauptquerträger 2 ist über Crashboxen 7 an einem nicht näher dargestellten Kraftfahrzeug abgestüzt. Es sind vertikale Streben 4 vorhanden, die den Hauptquerträger 2 und den Hilfsquerträger 3 miteinander verbinden. Diese vertikalen Streben 4 sind einstückig und werkstoffeinheitlich mit dem Hauptquerträger 2 und dem Hilfsquerträger 3 selbst hergestellt, insbesondere als Extrusionsbauteil. Ferner sind im Endbereich 5 von Hauptquerträger 2 und Hilfsquerträger 3 vertikale Elemente 6 angeordnet, die den Hauptquerträger 2 und den Hilfsquerträger 3 miteinander verbinden. Der Hauptquerträger 2 selbst ist als Zweikammerhohlprofil ausgebildet, der Hilfsquerträger 3 ist als Einkammerhohlprofil ausgebildet. Die vertikale Strebe 4 und das vertikale Element 6 sind werkstoffeinheitlich und einstückig mit dem Hauptquerträger 2 und dem Hilfsquerträger 3 ausgebildet.

Der Anpassung zu dem vorbeschriebenen Ausgestaltungsvarianten ist bei der vertikalen Strebe 4 jeweils ein Mehranteil ausgebildet, so dass sich ein deutlich breiterer, nach vorne gerichteter Steg 8 an der vertikalen Strebe 4 gemäß der Schnittlinie A-A ergibt. Ein nach hinten umgebogener Schenkel kann als zusätzliches Abstützelement 13 angesehen werden. Dieses zusätzliche Abstützelement 13 ist dann an der dahinter befindlichen Crashbox 7, insbesondere dargestellt in der Figur 7a seitlich abgestützt und mit dieser gekoppelt. Hierzu kann das zusätzliche Abstützelement 13 insbesondere gemäß der Figur 7e auf die Kraftfahrzeugvertikalrichtung Z versetzt nach oben abgebogen werden, um dann seitlich an der Crashbox 7 mit abgestützt zu werden. Auch wäre es alternativ vorstellbar, jedoch nicht gezeigt, dass die Crashbox 7 sich in Bezug auf die Höhe in Kraftfahrzeugvertikalrichtung Z über die eigentliche Höhe des Hauptquerträgers 2 hin aus erstreckt, mithin auf die Kraftfahrzeugvertikalrichtung Z nach unten weist die Höhe der Crashbox 7 bzw. die Anordnung der Crashbox 7 eine weitere Erstreckung in Kraftfahrzeugvertikalrichtung Z auf. Das zusätzliche Abstützelement 13, welches sich seitlich an der Crashbox 7 abstützt, ist somit nur seitlich abgebogen und nicht noch auf Kraftfahrzeugvertikalrichtung nach oben abgebogen, wie es in Figur 7e dargestellt ist.

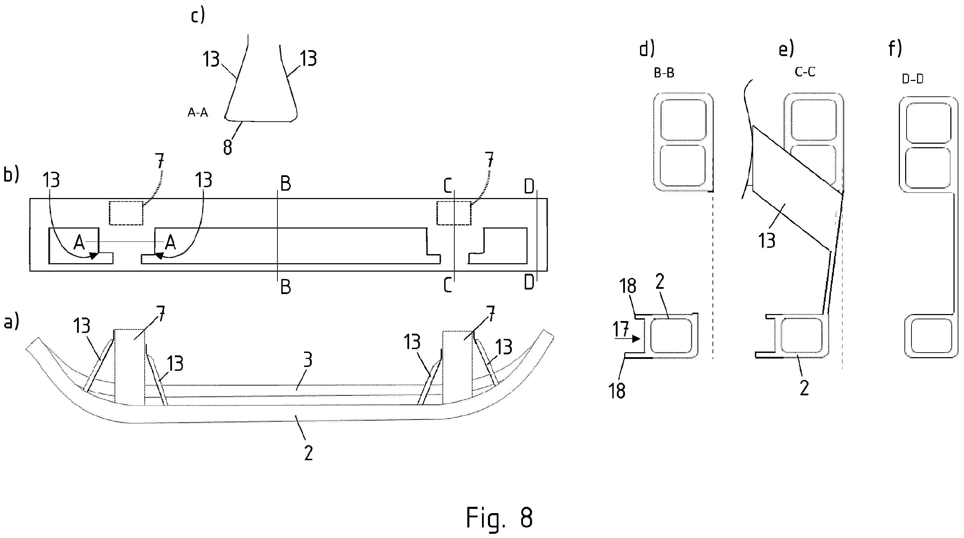

Figur 8 zeigt eine weitergehende Ausgestaltungsvariante der vorliegenden Erfindung. Figuren 8a bis f zeigen eine weitere Ausgestaltungsvariante der Erfindung. Diese basiert im Wesentlichen auf der in der Figur 7 beschriebenen Ausführungsvariante. Ergänzend ist hier jedoch die zusätzliche Abstützung nicht nur einseitig an einer jeweiligen Crashbox 7 vollzogen, sondern auf beiden Seiten der Crashbox 7. Insbesondere ergibt sich somit ein deutlich breiterer Steg 8 gemäß der Schnittlinie A-A dargestellt in Figur 8c, eine jeweils beidseitige Abstützung an der Crashbox 7 erfolgt. Figur 8 zeigt ergänzend, dass an der Rückseite des Hilfsquerträgers 2 abstehende Versteifungsstege vorhanden sind. Diese rückseitig abstehenden Versteifungsstege erzeugen insbesondere ein erhöhtes Widerstandsmoment gegen Biegung, um die Kraftfahrzeugvertikalrichtung. Mithin hat der Hilfsquerträger 2 aufgrund der Versteifungsstege eine höhere Steifigkeit.

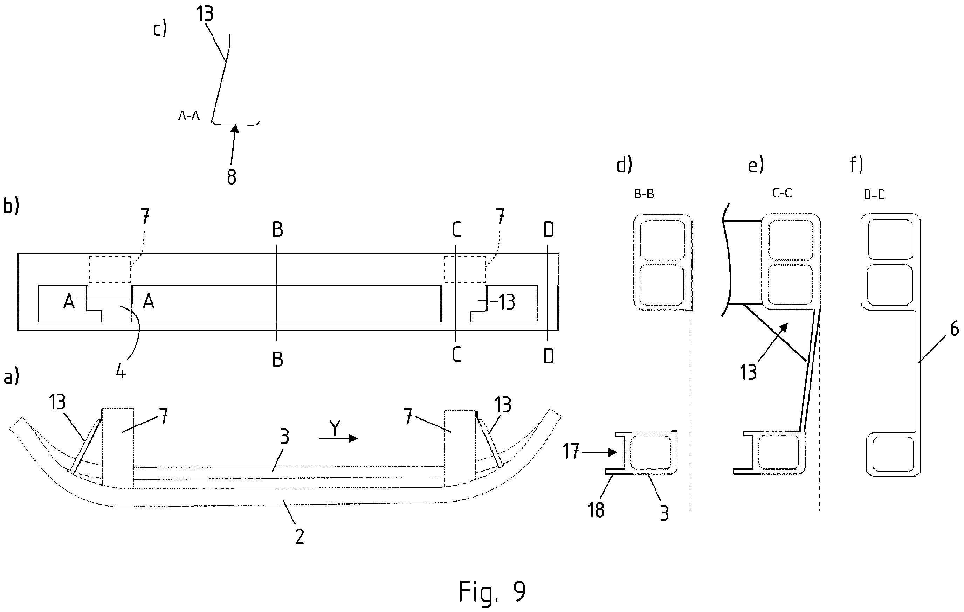

Figur 9a bis f zeigen eine alternative Ausgestaltungsvariante zu Figur 7. Hierbei sind etliche zusätzliche Abstützelemente vorhanden, welche sich an den Crashboxen 7 abstützen. Diese sind auf der Kraftfahrzeugquerrichtung außenseitig an den Crashboxen 7 abgestützt. Gemäß dem Beispiel in Figur 7 sind diese innenseitig an den Crashboxen 7 abgestützt. Auch hierdurch ergibt sich zunächst ein größerer Steg 8 bei einem vertikalen Element 6 gemäß Figur 9b und 9c. Die zusätzliche Abstützung versteift gemäß Figur 9 insbesondere das äußere Ende, welches an einem zusätzlichen Ab- oder Einknicken in Richtung Kraftfahrzeugquerrichtung aufgrund der schrägen Abstützung nach außen gehindert wird. Auch hier sind optional die zusätzlichen Versteifungsstege an der Rückseite des Hilfsquerträgers 3 angeordnet.

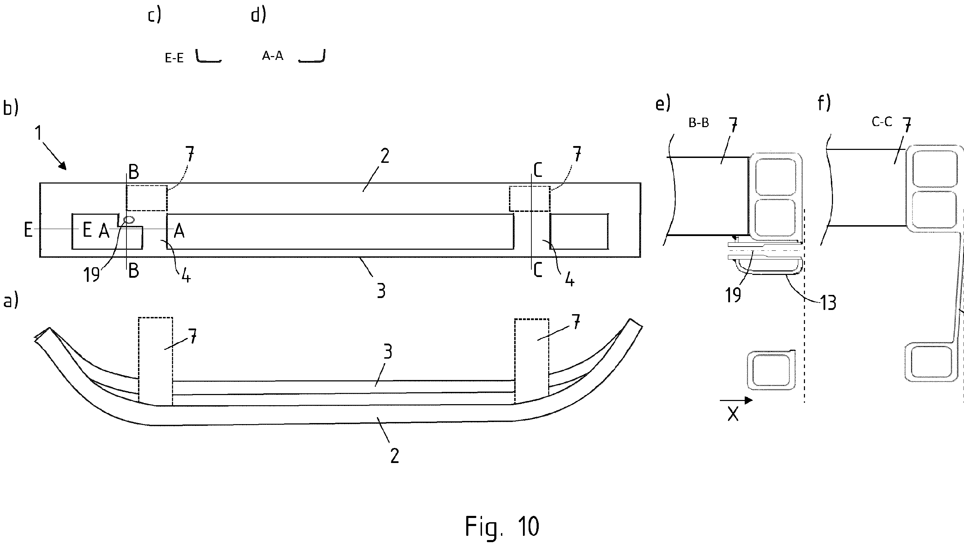

Figur 10a bis f zeigen eine weitere Alternative oder ergänzende Ausgestaltungsvariante der vorliegenden Erfindung. Hierbei ist wiederum die Stoßfängeranordnung 1 ausgebildet mit einem Hauptquerträger 2 sowie einem Hilfsquerträger 3. Diese beiden sind über vertikale Streben 4 miteinander gekoppelt. Gemäß der Ausgestaltungsvariante ist eine Abschleppöse 19 angeordnet in einem zusätzlichen Abstützelement 13. Diese Anordnung erfolgt gemäß der Schnittlinie B-B, dargestellt in Figur 10e, außerhalb der Crashbox 7 und außerhalb des Hauptquerträgers 2. Dies bringt erfindungsgemäß den Vorteil mit sich, dass sowohl der Hauptquerträger 2 als auch die Crashbox 7 im Falle eines Frontalcrashes entsprechend verformen können, ohne dass die Abschleppöse 19 die Verformung selbst beeinträchtigt. Die Abschleppöse 19 ist somit separat von Aufprallträger und Crashbox 7 angeordnet. Hierzu kann ein Teil des gemäß Figur 10f, Schnittlinie C-C, verbindenden vertikalen Elementes 6 bei Rohling bei einem Hauptquerträger 2 und Hilfsquerträger 3 verwendet werden und schneide- und biegetechnisch verarbeitet werden, so dass das zusätzliche Abschnittselement ausgebildet ist, welches dann auf in Kraftfahrzeuglängsrichtung nach hinten hin abgebogen wird, um eine zusätzliche Aufnahmekammer zu schaffen, in die dann eine Abschleppöse 19 eingebracht ist. Die Abschleppöse 19 kann beispielsweise in der Kammer verschweißt sein. Die Abschleppöse 19 ist jedoch außerhalb der Crashbox 7 und außerhalb des Hauptquerträgers 2 angeordnet, so dass diese keine Auswirkung auf die Crashperformance von Hauptquerträger 2 und Crashbox 7 selber hat.

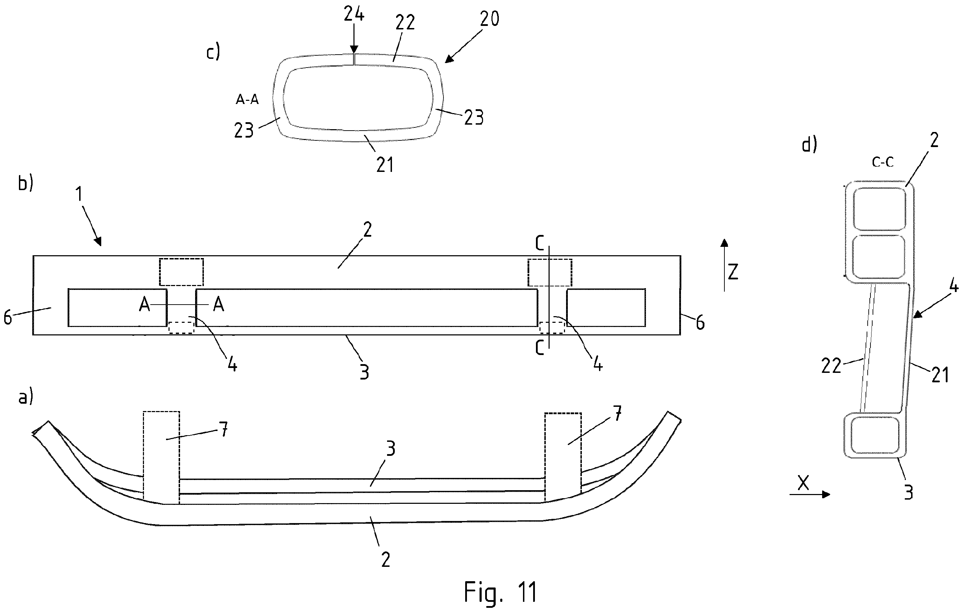

Figur 11a bis d zeigen eine weitere ergänzende und alternative Ausgestaltungsvariante der vorliegenden Erfindung.

Hierbei dargestellt ist wiederum eine Stoßfängeranordnung 1 aufweisend ein Hauptquerträger 2 sowie ein Hilfsquerträger 3, welche über vertikale Streben 4 miteinander gekoppelt sind. Die vertikalen Streben 4 sind hierbei jedoch als im Querschnitt selbst geschlossenes Hohlprofil 20 gemäß der Schnittlinie A-A ausgebildet. Diese weisen dann eine Vorderwand 21 und eine Rückwand 22 auf sowie Vorderwand und Rückwand verbindende Stege 23. Hergestellt wird dies, indem zunächst gemäß der Schnittlinie C-C dargestellten Figur 11d der Hauptquerträger 2 und Hilfsquerträger 3 zusammen als einstückiges Extrusionsprofil hergestellt werden. Die die Vorderwand 22 der vertikalen Strebe 4 bildende Verbindung zwischen Hauptquerträger 2 und Hilfsquerträger 3 wird dann schneidetechnisch ausgeschnitten. Im Anschluss daran werden diese auf die Kraftfahrzeuglängsrichtung X bezogen nach hinten abgebogen, um die verbindenden Stege 23 zu bilden und an der Rückwand 22 aufeinander zu zeigend orientiert geschlossen. An dem Stoßpunkt 24 kann eine Schweißung vorgenommen werden, um eine zusätzliche Versteifung hervorzurufen. Durch die Ausbildung eines Hohlprofils 20 als vertikale Strebe 4 wird eine höhere Steifigkeit zwischen Hauptquerträger 2 und Hilfsquerträger 3 sowie Abstützung des Hilfsquerträgers 3 ohne zusätzliche Abstützungen an einem Längsträger des Hilfsquerträgers 3 erreicht.

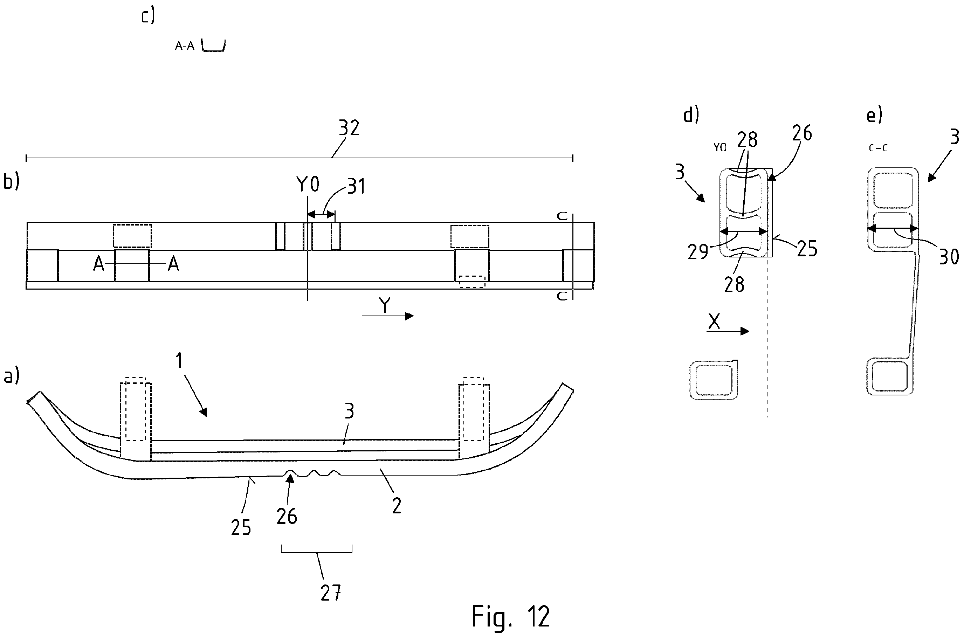

Figur 12a bis e zeigen eine weitere Ausgestaltungsvariante. Grundsätzlich sind die gleichen Eigenschaften vorhanden, wie sie auch in Figur 2 dargestellt sind. In Ergänzung zu Figur 2 ist jedoch hier in einem Mittelabschnitt des Hauptquerträgers 2 in der Vorderwand 25 mindestens eine, bevorzugt mehrere Triggersicken 26 ausgebildet. Die Triggersicken 26 dienen dazu, dass bei einem entsprechenden Aufprall eine initiale Deformation nur einer Seite der Stoßfängeranordnung 1 ausgeführt wird. Die Triggersicken 26 werden durch Eindrücken des Hauptquerträgers 2 ausgebildet. In diesen Bereich ist die Vorderwand 25 eingedrückt, so dass die Verbindungsstege 28 des hier dargestellten Zweikammerhohlprofils gestaucht sind. Es ergibt sich somit eine geringere Tiefe 29 in Kraftfahrzeug-X-Richtung gegenüber der Tiefe 30 des Hauptquerträgers 2, sowie er beispielsweise als Strangprofil hergestellt ist. Dies wird auch nochmals in Figur 12b und e erkennbar.

In diesem Fall sind drei Triggersicken 26 angeordnet. Eine ist zentral auf die Kraftfahrzeugquerrichtung Y mittig angeordnet. Die zwei weiteren sind davon benachbart angeordnet. Bevorzugt ist der Abstand 31 der Triggersicken 26 zueinander kleiner als 10 %, insbesondere kleiner als 5 % der Gesamtlänge 32 des Hauptquerträgers 2 in Kraftfahrzeugquerrichtung Y.

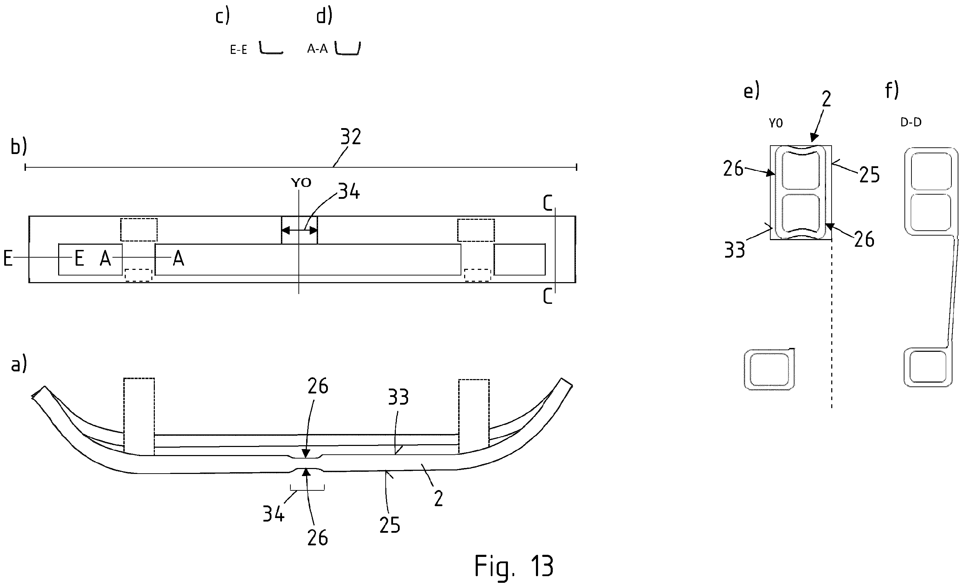

Figur 13 zeigt in Abwandlung zu Figur 12 eine zentrale Triggersicke 26 auf der Vorderwand 25 des Hauptquerträgers 2. Ferner ist eine weitere Triggersicke 26 an der Rückwand 33 des Hauptquerträgers 2 angeordnet. Die Triggersicke 26 ist hier breiter ausgebildet und weist bevorzugt eine Breite 34 zwischen 1 und 10 % der Gesamtlänge des Hauptquerträgers 2 auf. Auch hier werden die jeweiligen Triggersicken 26 an Vor- und Rückseite des Hauptquerträgers 2 durch entsprechende Eindrückungen erzeugt. Auch hier werden wiederum die Verbindungsstege 28 entsprechend eingeformt.

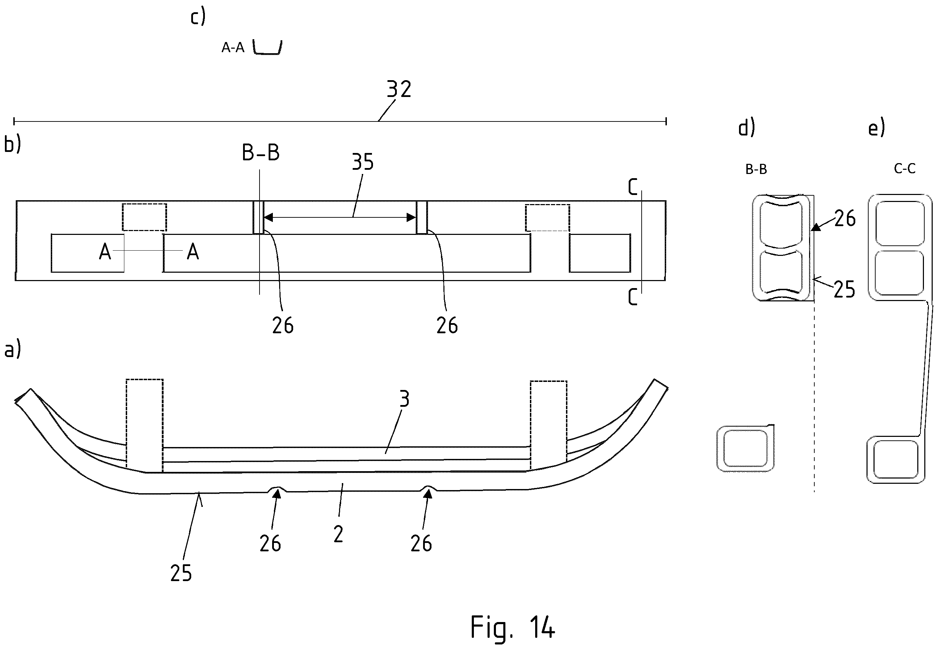

Figur 14a bis e zeigen eine weitere Ausgestaltungsvariante der erfindungsgemäßen Stoßfängeranordnung 1. Hierbei ist an den Hauptquerträger 2 an der Vorderwand jeweils zwei zueinander beabstandete Triggersicken 26 eingeformt. Diese Einformung erfolgt durch eine Eindrückung. Die beiden Triggersicken 26 sind bevorzugt mit einem Abstand 35 beabstandet, welcher 10 bis 30 % der Gesamtlänge 32 des Hauptquerträgers 2 entspricht. Die beiden Triggersicken 26 sind symmetrisch von einer Mittellängsebene des Hauptquerträgers 2 zueinander beabstandet.

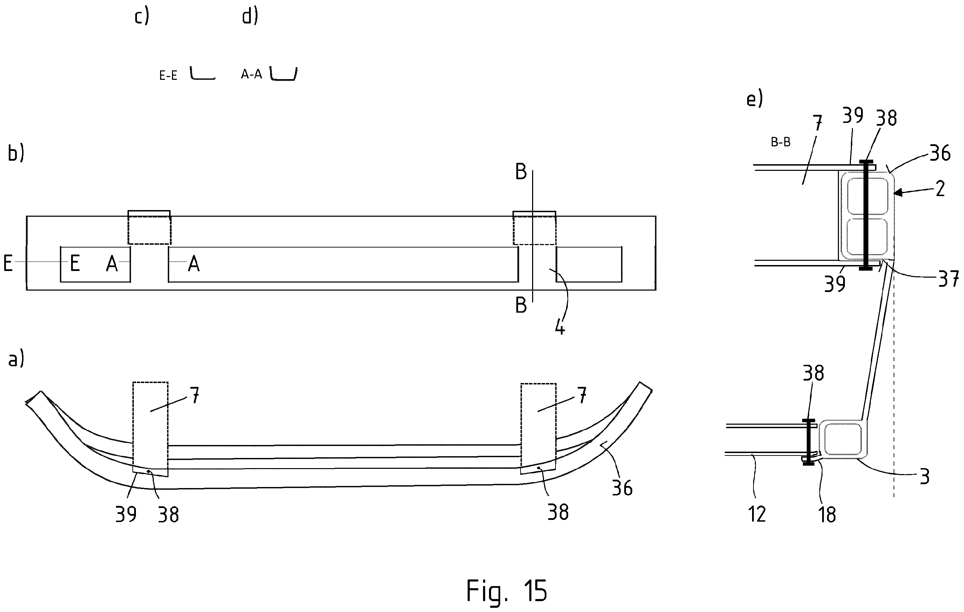

Figur 15 zeigt eine Befestigungsmöglichkeit, welche auf alle zuvor genannten Stoßfängeranordnungen 1 angewandt werden kann.

Hierbei ist die Crashbox 7 derart ausgebildet, dass sie an einer Oberseite 36 die Oberseite 36 und auch bevorzugt an einer Unterseite 37 den Hauptquerträger 2 überlappt. Es erfolgt dann ein zentraler Bolzen 38 bzw. eine Befestigungsschraube, welche den Hauptquerträger 2 durchgreifend diesen mit der Crashbox 7 koppelt. Zum Übergreifen sind entsprechende Fortsätze bzw. Zungen 39 vorgesehen, mit welcher die Crashbox 7 gegenüber den Hauptquerträger 2 übergreift. Insbesondere ist dies dargestellt in der Schnittansicht B-B in Figur 15e. Der Hilfsquerträger 3 weist ebenfalls einen nach hinten stehenden Versteifungssteg auf. Dieser Versteifungssteg dient zugleich der Kopplung mit einer zusätzlichen Crashbox 7. Auch hier ist ein Bolzen 38 vorgesehen, der den Versteifungssteg durchgreift und somit den Hilfsquerträger 3 mit der zusätzlichen Crashbox 12 koppelt.

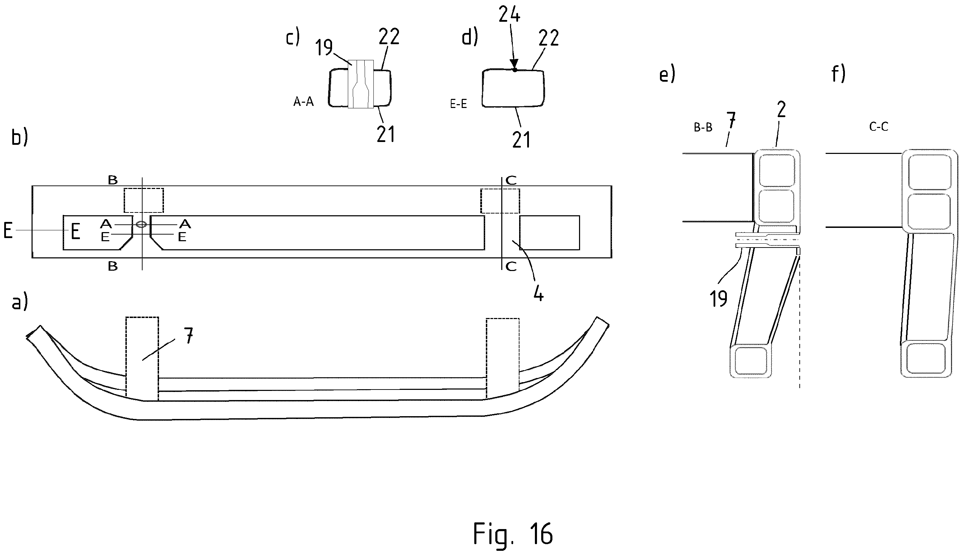

Figur 16a bis f zeigt eine weitere Ausgestaltungsvariante. Diese entspricht im Wesentlichen der Ausgestaltungsvariante gemäß Figur 11. Auch hier ist die jeweilige verikale Strebe 4 ausgebildet mit Vorderwand 21, Rückwand 22. Am Stoßpunkt 24 sind diese miteinander verschweißt. Ergänzend ist hier jedoch die vertikale Strebe 4 eine Abschleppöse 19, die Vorderwand und die Rückwand der vertikalen Strebe 4 durchgreifend angeordnet. Die Abschleppöse 19 ist gemäß der Schnittlinie in Figur 16e unterhalb des Hauptquerträgers 2 und auch unterhalb der Crashbox 7 angeordnet. Im Falle eines Frontalcrashes erfolgt somit keine Beeinträchtigung der

Crashperformance von Hauptquerträger 2 oder Crashbox 7 aufgrund der Abschleppöse 19.

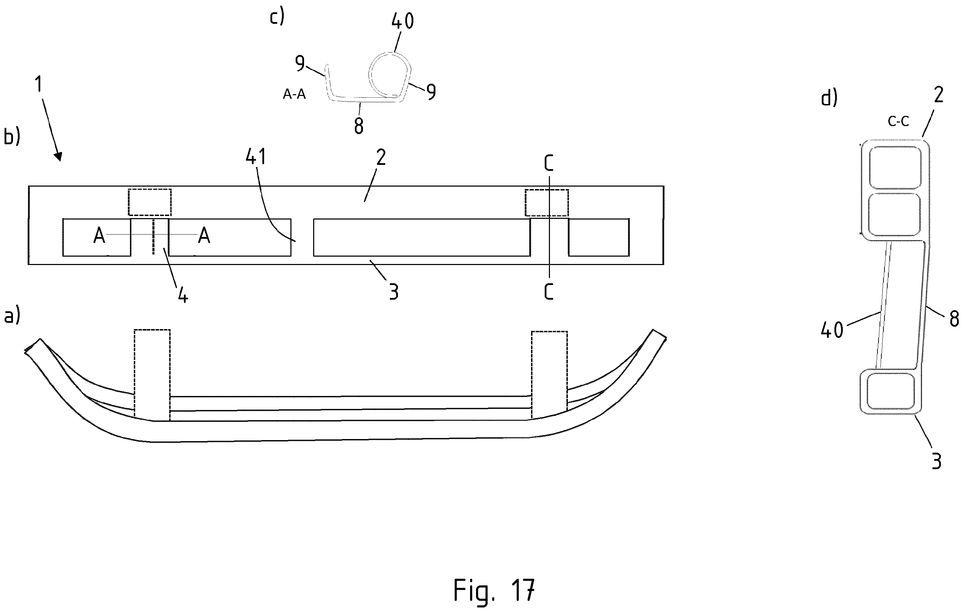

Figur 17a bis c zeigt eine alternative Ausgestaltungsvariante zu der Variante von Figur 11. Hierbei ist die Stoßfängeranordnung 1 derart ausgebildet, dass die vertikalen Streben 4, welche den Hauptquerträger 2 mit dem Hilfsquerträger 3 verbinden, insbesondere der Querschnittsansicht in Figur 17c nicht nur einen vorderen Steg und davon abstehende Schenkel aufweisen, sondern zumindest im Bereich eines Schenkels nochmals eingeschlagen bzw. umgerollt ausgebildet sind. Hierdurch ergibt sich im Querschnitt ein geschlossenes Hohlprofil 20 und dadurch erhöhte Steifigkeit der vertikalen Strebe 4.

Der eingeschlagene bzw. umgerollte Teil 40 kann nur umformtechnisch bearbeitet sein. Er kann jedoch auch zusätzlich, beispielsweise mit dem Steg oder Schenkel gekoppelt sein, beispielsweise durch Kleben oder Schweißen. Insgesamt ergibt sich eine erhöhte Steifigkeit der vertikalen Strebe 4.

Zusätzlich ist noch zwischen oberem Hauptquerträger 2 und unterem Hilfsquerträger 3 ein weiterer Aspekt der Erfindung dargestellt, welcher auch auf alle anderen Ausführungsbeispiele übertragbar ist. Es ist mindestens eine zusätzliche vertikale Strebe 41 dargestellt. Diese ist auch einstückig und werkstoffeinheitlich mit oberen Hauptquerträger 2 und dem unteren Hilfsquerträger 3 ausgebildet. Es können weitere zusätzliche verikale Streben 6 zwischen Hauptquerträger 2 und Hilfsquerträger 3 ausgebildet sein. Dies erhöht die Steifigkeit.

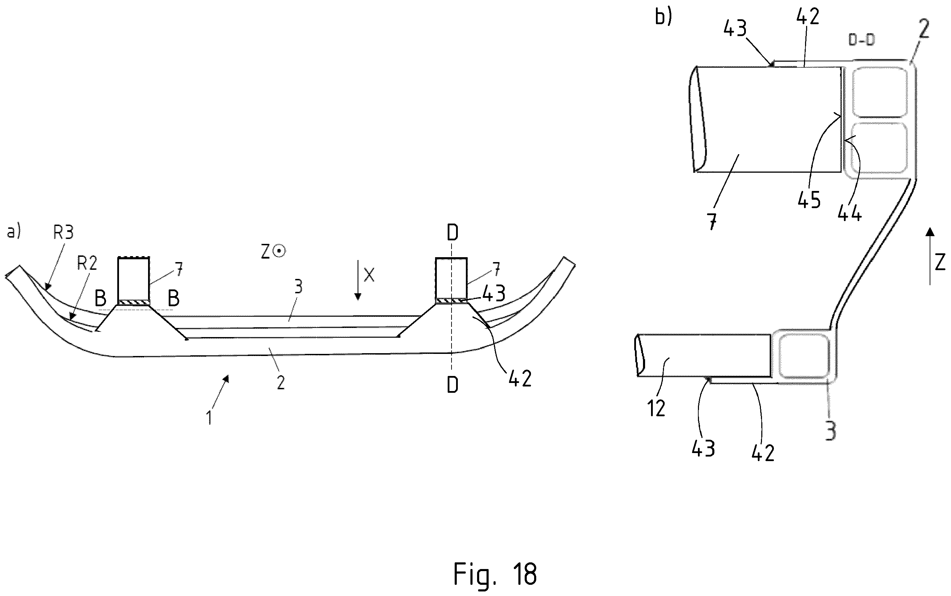

Figur 18 zeigt eine alternative Ausgestaltungsvariante, wie die Crashboxen 7 insbesondere an die Stoßfängeranordnung 1 gekoppelt werden können. Hierbei ist die Crashbox 7 sowie auch die zusätzliche Crashabstützung 12 jeweils mit einer vorderen Stirnseite 44 bis an die Rückwand 45 des Hauptquerträgers 2 herangeführt. Gleiches gilt für die untere zusätzliche Crashabstützung 12, welche an die Rückwand des Hilfsquerträgers 3 formschlüssig angelegt ist. Damit diese nunmehr gekoppelt sind, ist ein jeweiliger Flansch 42 vorgesehen, der rückwandig absteht sowohl von Hauptquerträger 2 als auch Hilfsquerträger 3 und dabei die Crashbox 7 bzw. die zusätzliche Crashabstützung 12 überlappt. Diese sind dann mit einer Schweißnaht, beispielsweise in Form einer Kehlnaht, stoffschlüssig gekoppelt. Diese Variante ermöglicht neben der stoffschlüssigen Koppelung eine zusätzliche formschlüssige Koppelung, so dass insbesondere die Stoßfängeranordnung 1 auf die Kraftfahrzeugvertikalrichtung Z formschlüssig gehalten ist.

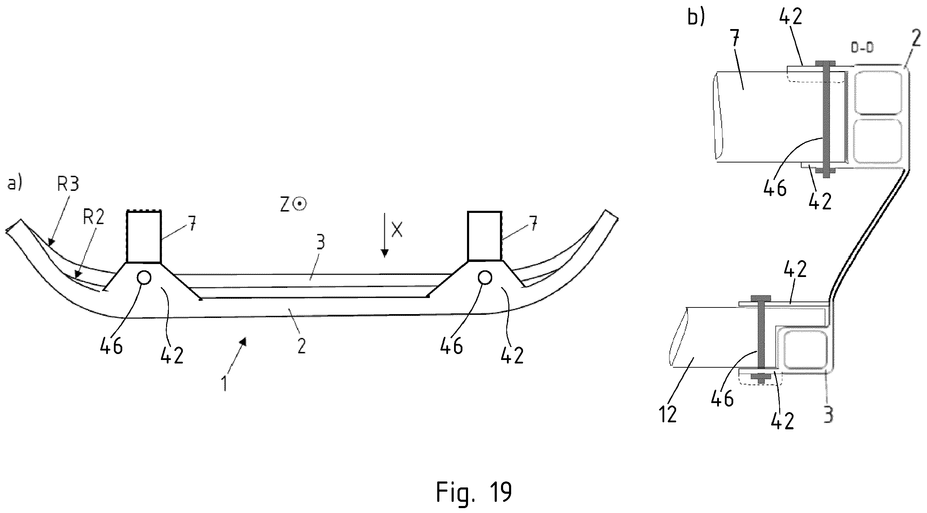

Figur 19 zeigt eine analoge Ausgestaltungsvariante, bei welcher jedoch die Koppelung nicht stoffschlüssig durch eine Schweißnaht erfolgt, sondern über einen Befestigungsbolzen 46. Hier sind dann jeweils auch zwei Flansche vorgesehen, welche die jeweilige Crashbox 7 bzw. den Hilfsquerträger 3 über zusätzliche Crashabstützung 12 überlappen bzw. gabelartig aufnehmen.

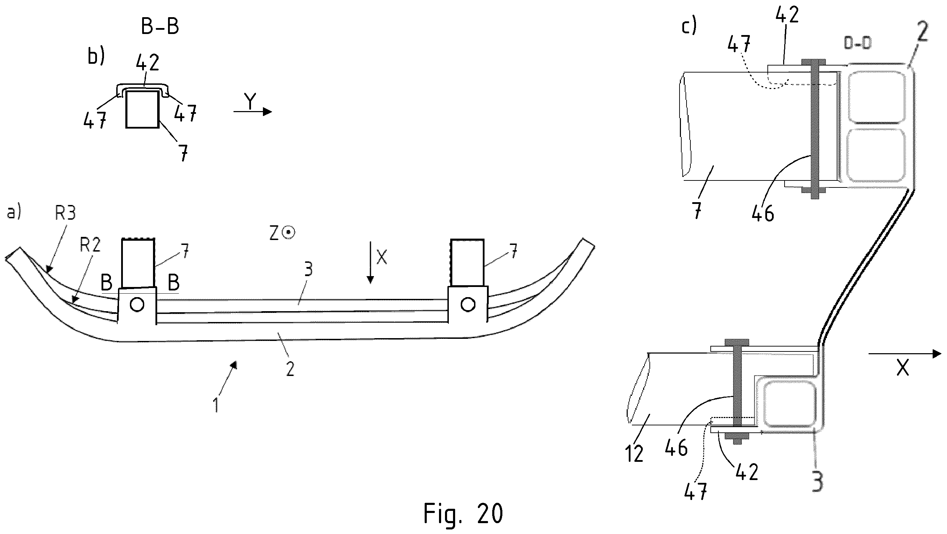

Figur 20a bis c zeigen eine weitere Ausgestaltungsvariante. Diese ist analog zur Figur 19 mit einem jeweiligen Befestigungsbolzen 46, welche die Crashbox 7 bzw. die zusätzliche Abstützung aufnehmen. Zusätzlich ist hier jedoch auch noch eine gabelartige Aufnahme auch in Kraftfahrzeugquerrichtung Y gemäß Figur 20b dargestellt. Die Crashbox 7 ist oberseitig von dem Flansch überlappt. Weiterhin umgreift der Flansch mit außenliegenden Schenkeln 47 auch noch die Crashbox 7 seitlich. Auch die zusätzliche Crashabstützung 12 weist dieses Merkmal auf. Zusätzlich übergreift diese mit einem Teil den unteren Hilfsquerträger 3 und ist mit ihrem vorderen Ende bis an die Frontseite des Hilfsquerträgers 3 in Kraftfahrzeuglängsrichtung X herangeführt.

Die in den Figuren 18, 19 und 20 jeweils beschriebenen Kopplungsmöglichkeiten können auf alle Ausführungsbeispiele übertragen werden, ohne dabei den Rahmen der Erfindung zu verlassen.

### Bezugszeichen:

- 1 -: Stoßfängeranordnung
- 2 -: Hauptquerträger
- 3 -: Hilfsquerträger
- 4 -: vertikale Strebe
- 5 -: Endbereich
- 6 -: vertikale Strebe
- 7 -: Crashbox
- 8 -: Steg
- 9 -: Schenkel
- 10 -: mittlerer Abschnitt zu 3
- 11 -: Rad
- 12 -: untere Crashabstützung
- 13 -: Abstützelement
- 14 -: Vorderseite zu 2
- 15 -: Vorderseite zu 3
- 16 -: Höhe zu 2
- 17 -: Rückseite zu 3
- 18 -: Versteifungstrebe
- 19 -: Abschleppöse
- 20 -: Hohlprofil
- 21 -: Vorderwand zu 20
- 22 -: Rückwand zu 20
- 23 -: Steg zu 21/22
- 24 -: Stoßpunkt
- 25 -: Vorderwand zu 2
- 26 -: Triggersicke
- 27 -: Mittelabschnitt zu 25
- 28 -: Verbindungssteg
- 29 -: Tiefe zu 2 in 26
- 30 -: Tiefe von 2
- 31 -: Abstand
- 32 -: Gesamtlänge zu 2
- 33 -: Rückwand
- 34 -: Breite
- 35 -: Abstand
- 36 -: Oberseite
- 37 -: Unterseite
- 38 -: Bolzen
- 39 -: Zunge
- 40 -: eingeschlagener Teil
- 41 -: vertikale Strebe
- 42 -: Flansch
- 43 -: Schweißnaht
- 44 -: Stirnseite
- 45 -: Rückwand zu 2
- 46 -: Befestigungsbolzen
- 47 -: Schenkel

- Z -: Kraftfahrzeugvertikalrichtung
- X -: Kraftfahrzeuglängsrichtung
- Y -: Kraftfahrzeugquerrichtung

## Patentansprüche

1. Stoßfängeranordnung (1) für ein Kraftfahrzeug, aufweisend einen oberen Hauptquerträger (2), welcher über Crashboxen (7) an dem Kraftfahrzeug koppelbar ist und einen unteren Hilfsquerträger (3), wobei Hauptquerträger (2) und Hilfsquerträger (3) miteinander über vertikale Streben (4, 6) gekoppelt sind, **dadurch gekennzeichnet, dass** der Hauptquerträger (2) und der Hilfsquerträger (3) zumindest abschnittsweise um die Vertikalachse gekrümmt verlaufen, wobei Hauptquerträger (2) und Hilfsquerträger (3) voneinander verschiedene Krümmungsradien aufweisen und/oder dass der Hilfsquerträger (3) gegenüber dem Hauptquerträger (2) in Kraftfahrzeuglängsrichtung (X) zum Kraftfahrzeug hin gerichtet zurückversetzt ist und/oder dass der Hilfsquerträger (3) einen mittleren Abschnitt aufweist, welcher auf die Vertikalrichtung bezogen versetzt ist und dass der Hauptquerträger (2) und der Hilfsquerträger (3) einstückig und werkstoffeinheitlich ausgebildet sind mit den vertikalen Streben (4).

2. Stoßfängeranordnung (1) nach Anspruch 1, **dadurch gekennzeichnet, dass** der Hauptquerträger (2) und der Hilfsquerträger (3) als Pressumformbauteil einstückig und werkstoffeinheitlich hergestellt sind, insbesondere aus einer Stahllegierung.

3. Stoßfängeranordnung (1) nach Anspruch 1 oder 2, **dadurch gekennzeichnet, dass** der Hauptquerträger (2) und der Hilfsquerträger (3) aus einem Extrusionsprofil einstückig und werkstoffeinheitlich hergestellt sind, insbesondere aus einer Leichtmetallegierung.

4. Stoßfängeranordnung (1) nach einem der vorangehenden Ansprüche, **dadurch gekennzeichnet, dass** die vertikale Strebe (4, 6) einen U-förmigen, C-förmigen oder hutförmigen Querschnitt aufweist.

5. Stoßfängeranordnung (1) nach einem der vorangehenden Ansprüche, **dadurch gekennzeichnet, dass** in dem Hauptquerträger (2) eine Eindrückung vorhanden ist, dergestalt, dass bei einer Belastung in Längsrichtung eine initiale Deformation stattfindet.

6. Stoßfängeranordnung (1) nach einem der vorangehenden Ansprüche, **dadurch gekennzeichnet, dass** der Hilfsquerträger (3) an den Crashboxen (7) mit gekoppelt ist und/oder dass der Hilfsquerträger (3) an zusätzlichen Längsträgern an dem Kraftfahrzeug abgestützt ist.

7. Stoßfängeranordnung (1) nach einem der vorangehenden Ansprüche, **dadurch gekennzeichnet, dass** an dem Hauptquerträger (2) und/oder Hilfsquerträger (3) mindestens ein zusätzliches Abstützelement (13) angeordnet ist, welche den Hauptquerträger (2) und/oder den Hilfsquerträger (3) zusätzlich an der Crashbox (7) abstützt.

8. Stoßfängeranordnung (1) nach einem der vorangehenden Ansprüche, **dadurch gekennzeichnet, dass** das Abstützelement (13) einstückig und werkstoffeinheitlich mit dem Hauptquerträger (2) bzw. dem Hilfsquerträger (3) ausgebildet ist.

9. Stoßfängeranordnung (1) nach einem der vorangehenden Ansprüche, **dadurch gekennzeichnet, dass** das Abstützelement (13) seitlich oder unterhalb der Crashbox (7) angeordnet ist.

10. Stoßfängeranordnung (1) nach einem der vorangehenden Ansprüche, **dadurch gekennzeichnet, dass** der Hauptquerträger (2) und der Hilfsquerträger (3) im Bereich Ihrer äußeren Enden über je ein vertikales Element (6) miteinander gekoppelt sind und dass diese vertikalen Elemente (6) für eine Abstützung zum Vorderrad im Crash ausgeführt sind.

11. Stoßfängeranordnung (1) nach einem der vorangehenden Ansprüche, **dadurch gekennzeichnet, dass** weitere vertikale Streben (41) den Hauptquerträger (2) mit dem Hilfsquerträger (3) verbinden.
